# EUROPEAN PATENT APPLICATION

(11) **EP 1 533 879 A1**
(43) Date of publication of application: **25.05.2005**
(21) Application number: 03360129.5
(22) Date of filing: 18.11.2003
(51) Int. Cl.: H02G 9/10, H02G 1/08

(54) **Cable system and method for laying cable**

(71) Applicant: ALCATEL, 75008 Paris (FR)
(72) Inventor: Nothofer, Klaus, 40699 Erkrath (DE); Leppert, Hans-Detlef, 41189 Mönchengladbach (DE); Teschner, Wolfgang, 31515 Wunstorf (DE)
(74) Representative: Dohmen, Johannes Maria Gerardus

(57) **Abstract**

This invention relates to a cable system, especially an optical fibre cable system being installed in a sewer tube system having a main sewer 1 and at least one lateral 2, entering the main sewer 1 at an entering point 4 and connecting a cable access point 5 to the main sewer 1 and a method for laying cable resulting in the cable system. The cable system is having at least one cable distributor point 6, located in or outside at or nearby a main sewer manhole 3 of the main sewer 1, and at least one main cable 7 being laid in the main sewer 1, reaching to the cable distributor point 6 and at least one access cable 8 being laid in the lateral 2, wherein said access cable 8 is connecting the access point 5 directly with the distributor point 6, being partially laid in the main sewer 1, parallel to the main cable 7, preferably wherein the access cable 8 and the main cable 7 are connected at the distributor point 6.

## Description

This invention relates to a cable system, especially an optical fibre cable system being installed in a sewer tube system, preferably a storm and/or sanitary sewer tube system, having a main sewer and at least one lateral, entering the main sewer at an entering point and connecting a cable access point to the main sewer and a method for laying cable resulting in the cable system. The cable system is having at least one cable distributor point, located in or outside at or nearby a main sewer manhole of the main sewer and at least one main cable being laid in the main sewer, reaching to the cable distributor point and at least one access cable being laid in the lateral. The cable system is preferably used for an installation of access telecommunication networks using sewer tubes including directly the sewer access tubes (laterals).

According to prior art there are solutions based on splitters and/or combiners for installing cables inside tubes (conduits). The main cable laid in the main sewer is spliced nearby an entering point of a lateral. Access cables are spliced at their entering point and connected to the splices of the main cable using splitters and/or combiners.
A disadvantage of the existing solutions is that by using splitters and/or combiners there is a need for prefabrication of the whole construction, meaning parts of the cable system, which are connected with a splitter or combiner. The use of a sophisticated robot system for fixing the prefabricated parts is necessary. Therefore an accurate length measurement of the sewer tubes the cables are being laid in is needed, which is being an obstacle. This disadvantage results in complicated installation procedures and high installation costs.

It is therefore an object of the invention to provide a cable system and a method for laying cable which overcome the problems associated with the related art, in particular which overcome the need of prefabrication of cable system parts.

The object concerning a cable system is attained by the cable system according to claim 1. The object concerning the method for laying cable is attained by the method defined in claim 8.
Further advantageous features of the invention are defined in the depending claims.

The inventive cable system is being installed in a sewer tube system having a main sewer and at least one lateral, entering the main sewer at an entering point and connecting a cable access point to the main sewer. The cable system is having at least one cable distributor point, located in or outside at or nearby a main sewer manhole of the main sewer. At this cable distributor point cables are connected together to form a cable network. Further the cable system is comprising at least one main cable being laid in the main sewer, reaching to the cable distributor point and at least one access cable being laid in the lateral. The access cable connects an access point, e.g. in or at a building such as a customer's house, to the cable network.
According to the invention in the cable system said access cable is connecting the access point directly to the distributor point. The access cable is being partially laid in the main sewer, parallel to the main cable, meaning the cables are both laid in a distance which is part of the main sewer length. Preferably, the access cable and the main cable are connected at the distributor point. This results in a cable system having cable splices, e.g. fibre splices, located only in and/or outside near sewer manholes and/or subscriber boxes and not at or neraby an entering point of a lateral, which may not be man accessable, because of being located in a distance to the manholes of the sewer tube system.

The inventive cable system results at least in the following advantages:
- The inventive cable system is based on a closed tubing construction without splitters or combiners and without the need of prefabrication.
- It forms an entire solution for a city net installation including the customer access.
- Easy and cost-effective installation of Telecommunication Access Networks without digging work is possible.

Preferably, the splices of the access cable and the main cable are located at said distributor point being located in a splice box, and/or at least one splice of the access cable is located at the access point, preferably being positioned in a subscriber box. To locate the splices in splice boxes or subscriber boxes it is advantageous to connect cables being part of the inventive cable system together and/or to cable networks, the inventive cable system is part of or shall be connected to, in a safe manner.

Preferably, the inventive cable system consists of optical fibre cables. To implement an optical fibre cable system as the inventive cable system is advantageous because construction and/or topology allows the installation of optical fibers and/or optical fiber cables within the sewer system without using a switch (conduit switch) and/or complex robot systems.

In another embodiment of the invention the cables of the inventive cable system are laid in cable ducts of a cable duct system, being installed in the sewer tube system and having at least one cable duct in the main sewer. The cable ducts are built of tubes, what results in a closed tubing construction without splitters and/or combiners and without the need of prefabrication.

In this embodiment it is preferred that said cable duct system consists of conduits (micro cable conduits), with at least one central conduit, having said main cable laid in and at least one access conduit in the main sewer, running parallel to the central conduit and having an access cable laid in between the distributor point and an entering point. Furthermore preferably the system consists of at least one lateral conduit (micro conduit system) in a lateral, having the access cable laid in between an access point and the entering point.
The cables are laid from the access points, e.g. in buildings, in the micro cable conduits inside lateral tubes all over through the cable conduit in the main sewer tube to the main sewer manhole. This results in a completely flexible tubing system for installation of a flexible and upgradable access cable network in sewer structures.

It is very advantageous if said lateral conduit is fixed and/or installed by an inliner or a lost form or a spiralled conduit. This results in fixed structure, by applying well-known low cost methods. An inliner is a plastic tube, which is brought into a, e.g. broken conduit. It has to be flexible to be able to adapt itself to any inner surface of the broken conduit. After applying the inliner the stability of the system still results from the broken conduit and the tightness results from the plastic tube. In principle, the inliner tube is a tissue tube, which is closed at one end. It is dipped into a mixture of resins, consisting e.g. of two components, just before applying it. For applying the inliner, mostly hot water is pumped into the dipped tube, resulting in that it fits closely to the inner surface of the conduits. The high temperature of the water results in hardening of the resins, with a speed according to the temperature.
A spiralled conduit is made of stainless steel, welded in its length. To apply the spiralled conduit in a tube, it is winded on a small cylinder. After that, the cylinder is brought into the tube and the winding is detached. Because of radial resetting forces the spiralled conduit attaches tightly to the inner surface of the tube.
A lost form is a plastic tube with small spacers at its outer surface. It is applied by laying it into a tube and filling the volume between the outer surface of the lost form and the tube is filled e.g. with concrete.

Preferably, said cable ducts are stainless steel tubes or corrugated steel tubes, preferably with a Polyethylene (PE) outer sheet. Preferably also the cables laid in the cable ducts are having an outer sheet of PE. The cable ducts may also be an ensemble of stainless steel tubes and corrugated steel tubes with an outer jacket, preferably made of a cross-linked high density Polyethylene (HDPE) outer sheet. The outer sheet may be carried within a corrugated stainless steel tube, acting instead of clamps between the cable distributor point or the manhole and the access point.
These materials are resistant to sewage.

According to the invention, the object concerning a method for laying cable from a distributor point to an access point in a cable system having a main cable being laid in a main sewer, reaching the distributor point, resulting in the inventive cable system is achieved by applying the steps of:
- feeding in an access cable or a pulling rope, having the access cable connected at its end, from the distributor point, preferably in a main sewer manhole through the main sewer, parallel to the main cable, until an entering point is reached by the access cable or the pulling rope,
- catching the access cable or the pulling rope from a lateral and pulling the access cable through the lateral until the access point is reached by the access cable.

By applying the inventive method the inventive cable system can be installed very easily without digging work.

Preferably, the access cable or the pulling rope is fed through a conduit, wherein an opening is built in the conduit at or near by the entering point and the access cable or the pulling rope is caught and pulled through the opening. In this case the cable is laid into a protecting conduit, resulting in that the system is resistant to sewage.

It is preferred that the access cable or the pulling rope is caught from the lateral by the aid of a hook, preferably connected to a fiber reinforced plastic rod (FRP-rod), which is fed through the lateral until the entering point is reached. A FRP-rod is highly flexible in a radial direction and stiff in an axial direction and therefore easily windable. FRP-rods are used in housekeeping.

The different features of the preferred embodiments of the invention may be used in combination together with the invention as set forth in the independent claims or just each single preferred embodiment together with the invention as set forth in the independent claims.

The embodiments of the invention will now be described with reference to the accompanying drawings.

In fig. 1 a cable system according to the invention is shown.
In fig. 2 the topology of an access network including the inventive cable system is shown.

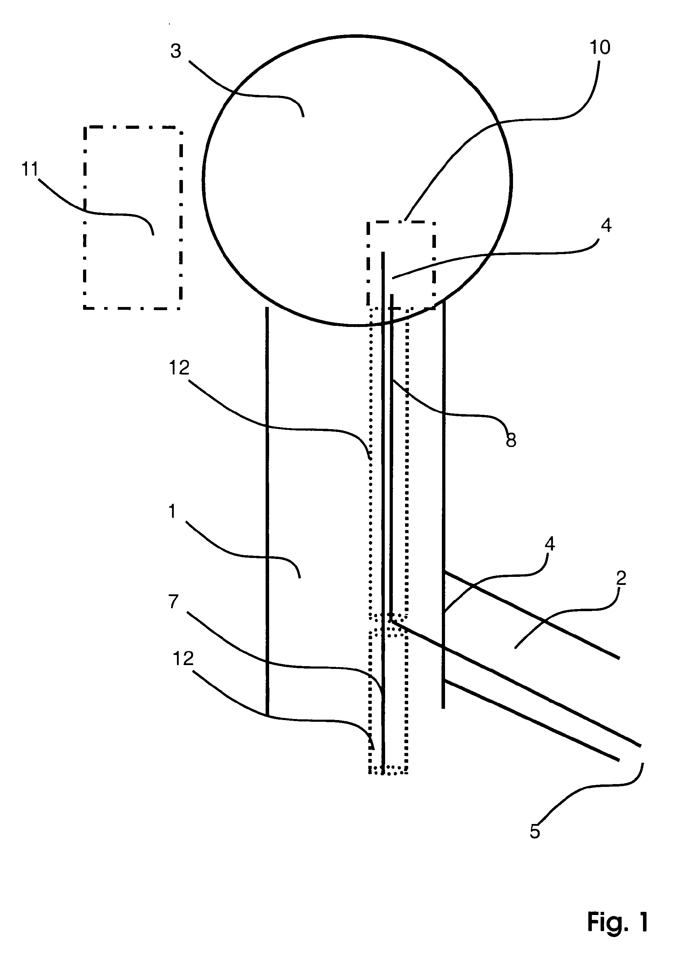

The inventive cable system shown in fig. 1 is installed in a system with main sewer pipes or tubes building a main sewer 1 with at least one lateral tube (lateral) 2 between main sewer manholes 3 (only one is shown). The lateral is entering the main sewer at an entering point 4. In the main sewer 1 a cable duct (conduit) system with multiple cable ducts 12 is installed. The cable duct system could also be built of only one cable duct 12, having an opening at or nearby the entering point. The conduits may preferably be made of stainless steel. An access cable 8 is laid in the lateral 2. Preferably, the cable is laid in microcable conduits inside the sewer system and in the lateral tubes. The access cable 8 is laid all the way from the access point through the lateral duct entering a cable duct 12 in the main sewer 1 and fed through the cable duct 12 in the main sewer 1 to the cable distributor point 6 in the main sewer manhole 3. The access cable 8 has no splice in between this way. Furthermore, a main cable 7 is laid in the main sewer 1, connecting the cable distributor point in the manhole 3 with e.g. a second cable distributor point somewhere else (not shown). The cable distributor point 6 is located in a closure 10 with a splice box within the manhole 3. The closure 11 with the splices may also be located outside the manhole. Then the access cable 8 and the main cable 7 must be fed through the main sewer until the closure 11 is reached. Cable splices, e.g. fibre splices, are located only in and/or outside near sewer manholes and/or subscriber boxes. At the distributor point 6 the main cable 7 and the access cable 8 may be connected, if this is appropriate in the topology of the cable network the inventive cable system is being part of. The access cable may be laid in a separate access conduit, which may be installed partly in the cable duct 12 in the main sewer and in the lateral or may build a separate duct in the main sewer and the lateral.

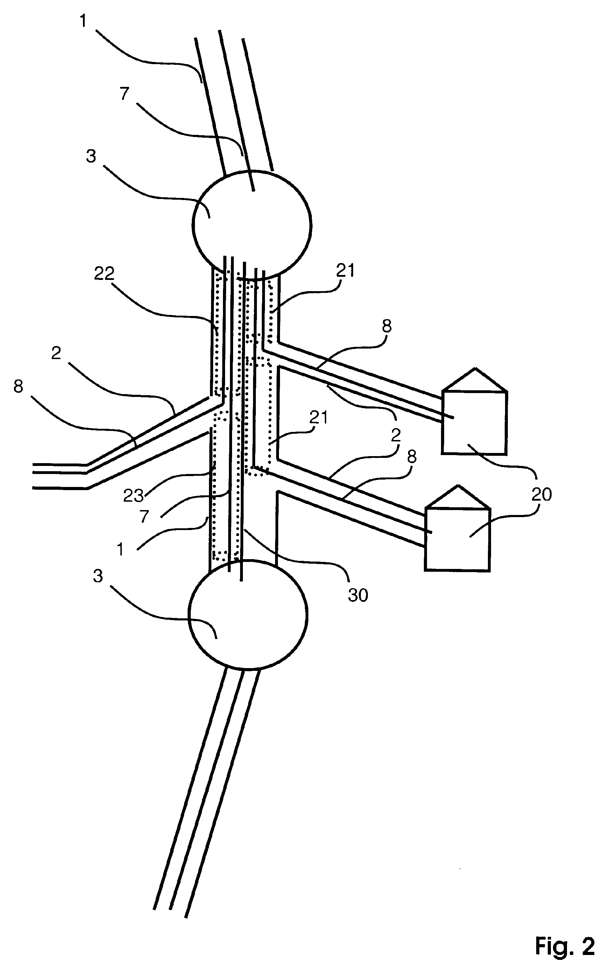

Fig. 2 is showing the topology of an access network (cabling system or topology) including the inventive cable system being installed in a sewer tube topology, including lateral tubes 2 in-between manholes 3 of the main sewer 1 tube.

The topology is having a conduit system with multiple conduit segments 7, 21, 22 in the main sewer tube 1. The conduit segments 21 are access conduits (micro conduit system), where access cables are laid in, to reach inside the laterals 2 until the access points, e.g. in or at buildings such as houses 20, are reached from the upper manhole 3 of the main sewer tube using the multiple conduit segments within the main sewer tube. In one of the conduit segments 22 an access cable 8 and a main cable 7 are laid in together. The main cable 7 is further laid in a central conduit 23, which is a conduit in the main sewer, having a main cable laid in. Furthermore, another main cable 30 is laid in the main sewer.
Cable fiber splices are located only in and/or outside near manholes of the main sewer tube and/or in subscriber boxes, what is indicated in the figure, due to the fact that the cables shown are only ending at access points or distributor points.

The sewer access cabling system is having a direct connection from the sewer tube to the building by using laterals. The open conduit-/ductsystem within the main sewer, which may be non-man-accessible, is used for installing a cable system. The left one of three for the left side of a street and the right one for the right side of the street. For using an installed conduit system, the installed conduit will be opened at the or nearby the lateral, meaning an entering point of the lateral into the main sewer.

Within the lateral, a conduit is installed by or fixed by an inliner or a conduit between sewer and inliner or corrugated or stainless steel tubes with or without a Polyethylene (PE) outer sheet or an ensemble of steel and corrugated steel tubes with an outer jacket based on a cross-linked High Density Polyethylene (HDPE) outer sheet.

The cables laid into the conduits, or even a conduit itself to be laid in a latter, can be equipped additionally, e.g. from factory side, with pulling ropes which can be easily caught from an access point, e.g. in a building at the end of a lateral by hooks on a fiber reinforced Plastic Rod (FRP-rod) such as normally used in housekeeping, in order to establish a complete roping of the conduit system in preparation of cable pulling. Therefore, the conduit system in the main sewer is opened (cutted) at or near by the lateral. The cut conduit within the main sewer is in this way used as a very long clamp, avoiding the need for installation of a large number of clamps, conduit for a large number of cables and/or sheeted steel tubes.
The cable can also be laid in the lateral duct, entering the cable duct in the main sewer and be fed through a duct in the main sewer to the main sewer manhole.

## Claims

1. A cable system being installed in a sewer tube system having a main sewer 1 and at least one lateral 2, entering the main sewer 1 at an entering point 4 and connecting a cable access point 5 to the main sewer 1, the cable system having
- at least one cable distributor point 6, located in or outside at or nearby a main sewer manhole 3 of the main sewer 1,
- at least one main cable 7 being laid in the main sewer 1, reaching to the cable distributor point 6 and
- at least one access cable 8 being laid in the lateral 2,
**characterised in that**
said access cable 8 is connecting the access point 5 directly with the distributor point 6, being partially laid in the main sewer 1, parallel to the main cable 7, preferably wherein the access cable 8 and the main cable 7 are connected at the distributor point 6.

2. The cable system according to claim 1,
**characterised in that** splices of the access cable and the main cable are located at said distributor point being located in a splice box, and/or at least one splice of the access cable is located at the access point, preferably being positioned in a subscriber box.

3. The cable system according to claim 1,
**characterised in that** said cable system consists of optical fibre cables.

4. The cable system according to claim 1,
**characterised in that** the cables are laid in cable ducts of a cable duct system, being installed in the sewer tube system and having at least one cable duct in the main sewer.

5. The cable system according to claim 4,
**characterised in that** said cable duct system consists of conduits, with at least one central conduit, having said main cable laid in and at least one access conduit in the main sewer, running parallel to the central conduit and having an access cable laid in between the distributor point and an entering point and preferably at least one lateral conduit in a lateral, having the access cable laid in between an access point and the entering point.

6. The cable system according to claim 5,
**characterised in that** said lateral conduit is fixed and/or installed by an inliner or a lost form or a spiralled conduit.

7. The cable system according to claim 4,
**characterised in that** said cable ducts are stainless steel tubes or corrugated steel tubes, preferably with a PE outer sheet or an ensemble of stainless steel tubes and corrugated steel tubes with an outer jacket, preferably made out of a cross-linked HDPE outer sheet.

8. A method for laying cable from a distributor point to an access point in a cable system having a main cable being laid in a main sewer, reaching the distributor point, resulting in a cable system according to claim 1,
**characterised in** having the steps of
- feeding in an access cable or a pulling rope, having the access cable connected at its end, from the distributor point, preferably in a main sewer manhole through the main sewer, parallel to the main cable, until an entering point is reached by the access cable or the pulling rope,
- catching the access cable or the pulling rope from a lateral and pulling the access cable through the lateral until the access point is reached by the access cable.

9. The method according to claim 8, **characterised in that** the access cable or the pulling rope is fed through a conduit, wherein an opening is built in the conduit at or near by the entering point and the access cable or the pulling rope is caught and pulled through the opening.

10. The method according to claim 8, **characterised in that** the access cable or the pulling rope is caught from the lateral by the aid of a hook, preferably connected to a FRP-rod, which is fed through the lateral until the entering point is reached.
